# EUROPEAN PATENT SPECIFICATION

(11) **EP 4 510 669 B1**
(45) Date of publication and mention of the grant of the patent: **13.05.2026**
(21) Application number: 23191590.1
(22) Date of filing: 16.08.2023
(51) Int. Cl.: H04W 16/14, H04W 74/00, H04W 92/12, H04W 88/08, H04W 88/10

(54) **DETERMINING RADIO CHAIN UTILIZATION FOR SPECTRUM SHARING**
BESTIMMUNG DER FUNKKETTENNUTZUNG ZUR GEMEINSAMEN SPEKTRUMSNUTZUNG
DÉTERMINATION D'UTILISATION DE CHAÎNE RADIO POUR PARTAGE DE SPECTRE

(43) Date of publication of application: 19.02.2025
(73) Proprietor: Nokia Solutions and Networks Oy, 02610 Espoo (FI)
(72) Inventor: DEISS, Thomas, Herne (DE); HATHIRAMANI, Navin, Coppell (US)
(74) Representative: Nokia EPO representatives

(56) References cited:
- WO-A1-2021/077129
- WO-A1-2021/163180

## Description

### FIELD

The following example embodiments relate to wireless communication and to spectrum sharing.

### BACKGROUND

As new radio access technologies are emerging, there is a challenge in how to operate the new radio access technologies in parallel with previous radio access technologies. Document WO 2021/163180 A1 (ALTIOSTAR NETWORKS INC [US]) 19 August 2021 (2021-08-19) discloses a communication system for executing dynamic spectrum sharing process, for the controlling of a single RU unit using one more DUs, where DUs can communicate with components of different types of communications networks (e.g., LTE, NR).

### BRIEF DESCRIPTION

The scope of protection sought for various example embodiments is set out by the independent claims. The example embodiments and features, if any, described in this specification that do not fall under the scope of the independent claims are to be interpreted as examples useful for understanding various embodiments.

According to an aspect, there is provided an apparatus comprising at least one processor, and at least one memory storing instructions that, when executed by the at least one processor, cause the apparatus at least to: receive a first set of fronthaul data associated with a first radio access technology; receive a second set of fronthaul data associated with a second radio access technology different from the first radio access technology; and determine, based at least on the first set of fronthaul data and the second set of fronthaul data, whether to utilize one or more radio chains of at least two radio chains for spectrum sharing between at least the first radio access technology and the second radio access technology.

According to another aspect, there is provided an apparatus comprising: means for receiving a first set of fronthaul data associated with a first radio access technology; means for receiving a second set of fronthaul data associated with a second radio access technology different from the first radio access technology; and means for determining, based at least on the first set of fronthaul data and the second set of fronthaul data, whether to utilize one or more radio chains of at least two radio chains for spectrum sharing between at least the first radio access technology and the second radio access technology.

According to another aspect, there is provided a method comprising: receiving a first set of fronthaul data associated with a first radio access technology; receiving a second set of fronthaul data associated with a second radio access technology different from the first radio access technology; and determining, based at least on the first set of fronthaul data and the second set of fronthaul data, whether to utilize one or more radio chains of at least two radio chains for spectrum sharing between at least the first radio access technology and the second radio access technology.

According to another aspect, there is provided a computer program comprising instructions which, when executed by an apparatus, cause the apparatus to perform at least the following: receiving a first set of fronthaul data associated with a first radio access technology; receiving a second set of fronthaul data associated with a second radio access technology different from the first radio access technology; and determining, based at least on the first set of fronthaul data and the second set of fronthaul data, whether to utilize one or more radio chains of at least two radio chains for spectrum sharing between at least the first radio access technology and the second radio access technology.

According to another aspect, there is provided a computer readable medium comprising program instructions which, when executed by an apparatus, cause the apparatus to perform at least the following: receiving a first set of fronthaul data associated with a first radio access technology; receiving a second set of fronthaul data associated with a second radio access technology different from the first radio access technology; and determining, based at least on the first set of fronthaul data and the second set of fronthaul data, whether to utilize one or more radio chains of at least two radio chains for spectrum sharing between at least the first radio access technology and the second radio access technology.

According to another aspect, there is provided a non-transitory computer readable medium comprising program instructions which, when executed by an apparatus, cause the apparatus to perform at least the following: receiving a first set of fronthaul data associated with a first radio access technology; receiving a second set of fronthaul data associated with a second radio access technology different from the first radio access technology; and determining, based at least on the first set of fronthaul data and the second set of fronthaul data, whether to utilize one or more radio chains of at least two radio chains for spectrum sharing between at least the first radio access technology and the second radio access technology.

### LIST OF DRAWINGS

In the following, various example embodiments will be described in greater detail with reference to the accompanying drawings, in which
FIG. 1 illustrates an example of a wireless communication network;
FIG. 2 illustrates an example of a system;
FIG. 3A illustrates an example of a system;
FIG. 3B illustrates an example of a system;
FIG. 3C illustrates an example of a system;
FIG. 4 illustrates a signal flow diagram;
FIG. 5 illustrates a signal flow diagram;
FIG. 6 illustrates a signal flow diagram;
FIG. 7 illustrates a flow chart;
FIG. 8 illustrates a flow chart; and
FIG. 9 illustrates an example of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Some example embodiments described herein may be implemented in a wireless communication network comprising a radio access network based on one or more of the following radio access technologies (RATs): Global System for Mobile Communications (GSM) or any other second generation radio access technology, Universal Mobile Telecommunication System (UMTS, 3G) based on basic wideband-code division multiple access (W-CDMA), high-speed packet access (HSPA), Long Term Evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the Evolved Universal Terrestrial Radio Access network (E-UTRA), or the next generation radio access network (NG-RAN). The wireless communication network may further comprise a core network, and some example embodiments may also be applied to network functions of the core network.

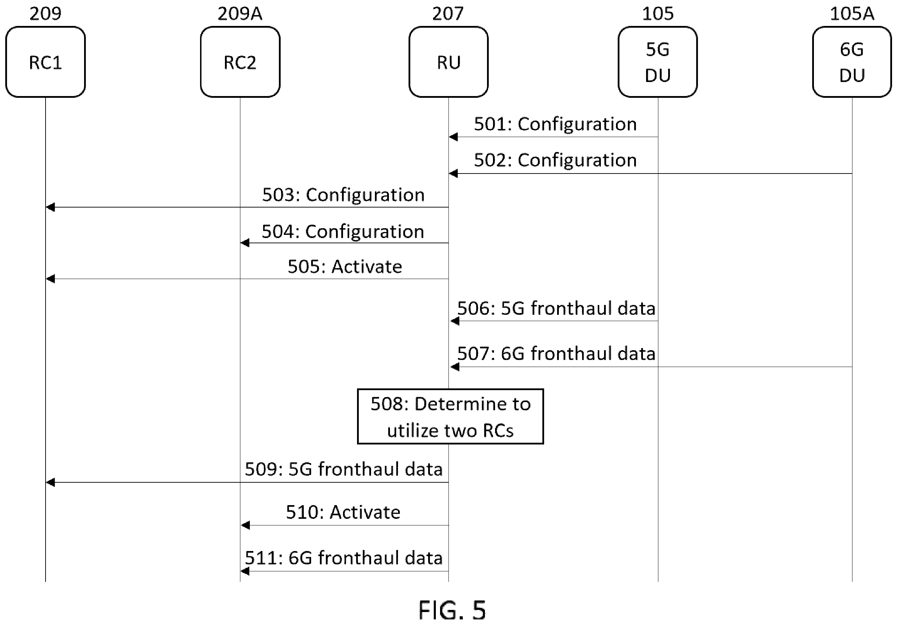

It should be noted that the embodiments are not restricted to the wireless communication network given as an example, but a person skilled in the art may also apply the solution to other wireless communication networks or systems provided with necessary properties. For example, some example embodiments may also be applied to a communication system based on the Institute of Electrical and Electronics Engineers (IEEE) 802.11 specifications, or a communication system based on IEEE 802.15 specifications. The claimed invention corresponds to fig. 5 and to the related text in the description. The remaining figures and the text of the description are intended to better explain the invention.

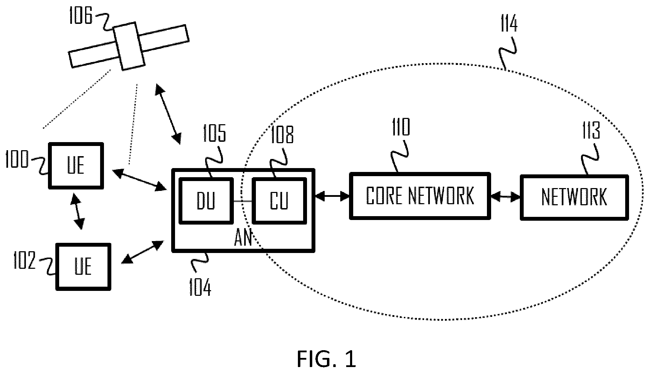

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the embodiments described herein to other wireless communication networks provided with necessary properties.

The example wireless communication network shown in FIG. 1 includes an access network, such as a radio access network (RAN), and a core network 110.

FIG. 1 shows user equipment (UE) 100, 102 configured to be in a wireless connection on one or more communication channels in a radio cell with an access node (AN) 104 of an access network. The AN 104 may be an evolved NodeB (abbreviated as eNB or eNodeB), or a next generation evolved NodeB (abbreviated as ng-eNB), or a next generation NodeB (abbreviated as gNB or gNodeB), providing the radio cell. The wireless connection (e.g., radio link) from a UE to the access node 104 may be called uplink (UL) or reverse link, and the wireless connection (e.g., radio link) from the access node to the UE may be called downlink (DL) or forward link. UE 100 may also communicate directly with UE 102, and vice versa, via a wireless connection generally referred to as a sidelink (SL). It should be appreciated that the access node 104 or its functionalities may be implemented by using any node, host, server or access point etc. entity suitable for providing such functionalities.

The access network may comprise more than one access node, in which case the access nodes may also be configured to communicate with one another over links, wired or wireless. These links between access nodes may be used for sending and receiving control plane signaling and also for routing data from one access node to another access node.

The access node may comprise a computing device configured to control the radio resources of the access node. The access node may also be referred to as a base station, a base transceiver station (BTS), an access point, a cell site, a radio access node or any other type of node capable of being in a wireless connection with a UE (e.g., UEs 100, 102). The access node may include or be coupled to transceivers. From the transceivers of the access node, a connection may be provided to an antenna unit that establishes bi-directional radio links to UEs 100, 102. The antenna unit may comprise an antenna or antenna element, or a plurality of antennas or antenna elements.

The access node 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and a mobility management entity (MME). The 5GC may comprise network functions, such as a user plane function (UPF), an access and mobility management function (AMF), and a location management function (LMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device just to mention but a few names. The UE may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or any computing device comprising a wireless modem integrated in a vehicle.

It should be appreciated that a UE may also be a nearly exclusive uplink-only device, of which an example may be a camera or video camera loading images or video clips to a network. A UE may also be a device having capability to operate in an Internet of Things (IoT) network, which is a scenario in which objects may be provided with the ability to transfer data over a network without requiring human-to-human or human-to-computer interaction. The UE may also utilize cloud. In some applications, the computation may be carried out in the cloud or in another UE.

The wireless communication network may also be able to support the usage of cloud services, for example at least part of core network operations may be carried out as a cloud service (this is depicted in FIG. 1 by "cloud" 114). The wireless communication network may also comprise a central control entity, or the like, providing facilities for wireless communication networks of different operators to cooperate for example in spectrum sharing.

5G enables using multiple input - multiple output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine type applications, such as (massive) machine-type communications (mMTC), including vehicular safety, different sensors and real-time control.

In 5G wireless communication networks, access nodes and/or UEs may have multiple radio interfaces, namely below 6GHz, cmWave and mmWave, and also being integrable with existing legacy radio access technologies, such as the LTE. Integration with the LTE may be implemented, for example, as a system, where macro coverage may be provided by the LTE, and 5G radio interface access may come from small cells by aggregation to the LTE. In other words, a 5G wireless communication network may support both inter-RAT operability (inter-radio-access-technology operability, such as LTE-5G) and inter-RI operability (inter-radio-interface operability, such as below 6GHz - cmWave - mmWave). One of the concepts considered to be used in 5G wireless communication networks may be network slicing, in which multiple independent and dedicated virtual sub-networks (network instances) may be created within the substantially same infrastructure to run services that have different requirements on latency, reliability, throughput and mobility.

In some example embodiments, an access node (e.g., access node 104) may comprise: a radio unit (RU) comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node. The DU 105 may be a logical node hosting radio link control (RLC), medium access control (MAC) and/or physical (PHY) layers of the NR protocol stack for the access node. The operations of the DU may be at least partly controlled by the CU. It should also be understood that the distribution of functions between DU 105 and CU 108 may vary depending on implementation. The CU may comprise a control plane (CU-CP), which may be a logical node hosting the RRC and the control plane part of the PDCP protocol of the NR protocol stack for the access node. The CU may further comprise a user plane (CU-UP), which may be a logical node hosting the user plane part of the PDCP protocol and the SDAP protocol of the CU for the access node.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the access network (e.g., RAN) by utilizing network function virtualization (NFV) and software defined networking (SDN). Using edge cloud may mean access node operations to be carried out, at least partly, in a computing system operationally coupled to a remote radio head (RRH) or a radio unit (RU) of an access node. It is also possible that access node operations may be performed on a distributed computing system or a cloud computing system located at the access node. Application of cloud RAN architecture enables RAN real-time functions being carried out at the access network (e.g., in a DU 105) and non-real-time functions being carried out in a centralized manner (e.g., in a CU 108).

It should also be understood that the distribution of functions between core network operations and access node operations may differ in future wireless communication networks compared to that of the LTE or 5G, or even be non-existent. Some other technology advancements that may be used include big data and all-IP, which may change the way wireless communication networks are being constructed and managed. 5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network, enabling more extensive network coverage. Possible use cases may be providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). A given satellite 106 in the mega-constellation may cover several satellite-enabled network entities that create on-ground cells. The on-ground cells may be created through an on-ground relay access node or by an access node 104 located on-ground or in a satellite.

It is obvious for a person skilled in the art that the access node 104 depicted in FIG. 1 is just an example of a part of an access network (e.g., a radio access network) and in practice, the access network may comprise a plurality of access nodes, the UEs 100, 102 may have access to a plurality of radio cells, and the access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of an access network (e.g., a radio access network), a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of access networks, the concept of "plug-and-play" access nodes may be introduced. An access network which may be able to use "plug-and-play" access nodes, may include, in addition to Home eNodeBs or Home gNodeBs, a Home Node B gateway, or HNB-GW (not shown in FIG. 1). An HNB-GW, which may be installed within an operator's access network, may aggregate traffic from a large number of Home eNodeBs or Home gNodeBs back to a core network of the operator.

6G wireless communication networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

Some example embodiments relate to spectrum sharing. Spectrum sharing means that multiple (at least two) radio access technologies, such as LTE and 5G NR, or 5G NR and 6G, share the same frequency spectrum or radio frequencies for their respective operations.

For example, dynamic spectrum sharing (DSS) is a framework to enable spectrum migration from one radio access technology to another (namely, from 4G to 5G). In DSS, the "dynamic" means that the channel allocation is not static but varies in time and/or frequency (e.g., from subframe or slot to another).

DSS allows for progressive resource (frequency) dedication to 5G NR, as the number of 5G NR UEs increases. With 4G-5G DSS, the 5G carrier can be deployed on top of a 4G carrier, allowing to support the 4G traffic while providing 5G coverage, even if the traffic demand for 5G is not yet there. In other words, DSS enables 4G and 5G to share the same carrier.

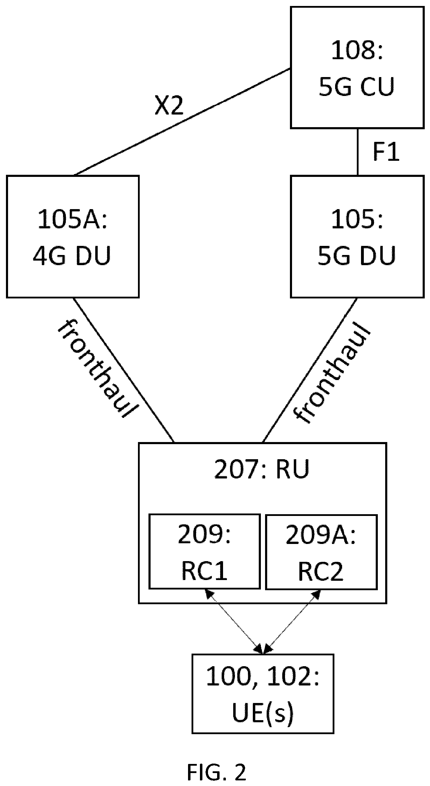

FIG. 2 illustrates an example of a system for 4G-5G DSS. The system comprises a 5G central unit (CU) 108, a 5G distributed unit (DU) 105, a 4G DU 105A (or 4G baseband unit), and a radio unit (RU) 207. The radio unit 207 may comprise at least two radio chains (RC) 209, 209A for communicating with one or more UEs 100, 102. The communication between the 4G DU 105A and the 5G CU 108 may be performed, for example, via an X2 interface. The 4G DU 105A and the 5G DU 105 may communicate with the RU 207 via a communication link referred to as a fronthaul interface. The fronthaul interface may be used to transport fronthaul data. The fronthaul data may comprise user-plane (U-plane) data and/or control-plane (C-plane) data to enable the delivery of voice, data, and/or multimedia services over the wireless communication network.

It should be noted that multi-vendor solutions have not been specified for 4G-5G DSS. However, in 6G, the expectation is that multi-vendor solutions will be enabled via standards. Multi-RAT spectrum sharing (MRSS) may be seen as an evolution of DSS with the objective to address the shortcomings of 4G-5G DSS. For example, MRSS may be implemented in a multi-vendor scenario.

A multi-vendor scenario may mean, for example, that a first vendor may supply baseband processing for a first RAT (e.g., 5G), and a second vendor may supply baseband processing for a second RAT (e.g., 6G), wherein both RATs may employ the same radio unit, which may be supplied by a third vendor.

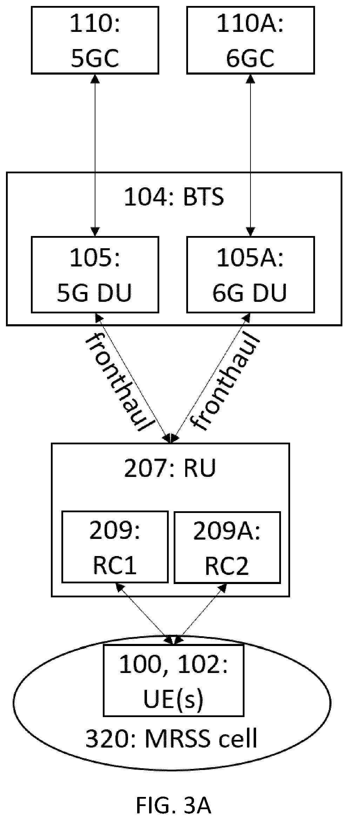

FIG. 3A illustrates an example of a system for 5G-6G MRSS, wherein a single base station 104 is used for 5G and 6G. The base station 104 comprises a 5G DU 105 and a 6G DU 105A. The 5G DU 105 may be configured to communicate with a 5G core network (5GC) 110, and the 6G DU 105A may be configured to communicate with a 6G core network (6GC) 110A. The 5G DU 105 and the 6G DU 105A may be further configured to communicate with a radio unit 207 shared by the 5G DU 105 and the 6G DU 105A. The radio unit 207 may comprise at least two radio chains (RC) 209, 209A providing an MRSS cell 320 for communicating with one or more UEs 100, 102. The MRSS cell 320 may comprise a 5G cell and a 6G cell.

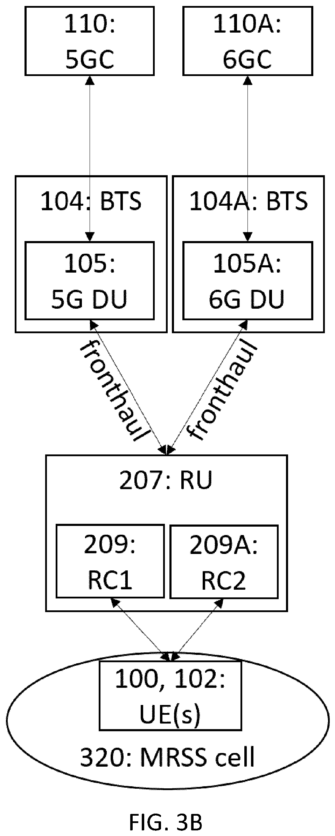

FIG. 3B illustrates another example of a system for 5G-6G MRSS, wherein two independent base stations 104, 104A are used for 5G and 6G, respectively. The first base station 104 comprises a 5G DU 105 configured to communicate with a 5G core network (5GC) 110. The second base station 104A comprises a 6G DU 105A configured to communicate with a 6G core network (6GC) 110A. The 5G DU 105 and the 6G DU 105A may be further configured to communicate with a radio unit 207 shared by the 5G DU 105 and the 6G DU 105A. The radio unit 207 may comprise at least two radio chains (RC) 209, 209A providing an MRSS cell 320 for communicating with one or more UEs 100, 102. The MRSS cell 320 may comprise a 5G cell and a 6G cell.

The system depicted in FIG. 3A may be more suitable for single-vendor MRSS deployments, whereas the system depicted in FIG. 3B may be employed for multi-vendor MRSS deployments. In both cases, the radio unit 207 is shared between the 5G DU 105 and the 6G DU 105A.

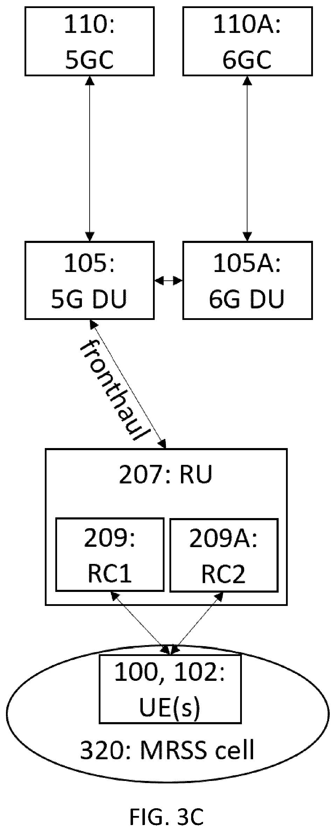

FIG. 3C illustrates another example of a system for 5G-6G MRSS, wherein the fronthaul data is chained towards the radio unit 207. For example, the 6G DU 105A may send its fronthaul data to the 5G DU 105, and the 5G DU 105 may then send both the 5G fronthaul data and the 6G fronthaul data to the radio unit 207. In an alternative embodiment, the 5G DU 105 may send its fronthaul data to the 6G DU 105A, and the 6G DU 105A may then send both the 5G fronthaul data and the 6G fronthaul data to the radio unit 207. The 5G DU 105 and the 6G DU 105A may be comprised in the same base station, or they may be comprised in separate base stations.

In FIGS. 3A, 3B, and 3C, operating the MRSS cell 320 may require operating the radio unit 207 with two radio chains 209, 209A (one for 5G and one for 6G). However, depending on the load, it may be sufficient to use just one radio chain and put the other radio chain into sleep mode. In this case, a single radio chain may transmit or receive 5G data and 6G data at the same time, although capacity or spectral efficiency may be reduced.

A radio chain 209, 209A, also known as a radio channel or transceiver chain, refers to a specific path within the radio unit that comprises at least one transmitter and at least one receiver. The radio chain represents the set of components and functionalities required to handle the transmission and reception of radio frequency (RF) signals.

Having two (or more) radio chains permanently active may not be energy efficient. Studies have shown that the RAN is the network element which consumes most power within the wireless communication network, and within the RAN the power amplifiers of the radio units, due to their low efficiency, are one of the top consumers of energy. In MRSS, the spectrum is shared, so it may not be necessary to always have two radio chains active, wherein a given radio chain may just use, for example, a part of the shared spectrum.

Thus, it may be beneficial to reduce the number of active radio chains in MRSS operation by, for example, transitioning one of the radio chains into sleep mode. However, a framework would be needed to coordinate the usage of one or more radio chains for one or both DUs.

In some example embodiments, the radio unit 207 may autonomously decide whether to operate one or more radio chains and whether to put at least one of the radio chains into sleep mode. The radio unit 207 makes the decision based on fronthaul data received from the DUs (e.g., based on implicit information within the transmit or receive requests). Employing the fronthaul interface and performing the determination at the RU 207 may allow for easier multi-vendor implementations, while being able to provide energy savings.

The example embodiments described below may enable to temporarily switch to a shared radio chain (e.g., shared between 5G and 6G) to allow deeper sleep modes compared to discontinuous transmission (DTX), while being able to provide full performance. This may be beneficial, for example, during the initial deployments of MRSS, since the number of 6G UEs may initially be very low. It would be difficult to justify a significant power increase in the RU when, for example, using the same DU and spectral resources with little to no extra users.

Furthermore, the example embodiments may require no additional coordination protocol and no new interfaces among the baseband units or separate base stations (or DUs).

Some example embodiments are described below by using an MRSS deployment between 5G and 6G as an example. However, some example embodiments are not limited to 5G and 6G, and they may be applied for spectrum sharing between any two or more radio access technologies. For example, some example embodiments may be applied for DSS between 4G and 5G. As another example, some example embodiments may be applied for spectrum sharing between 4G and 6G. As another example, some example embodiments may be applied for spectrum sharing between 4G, 5G and 6G.

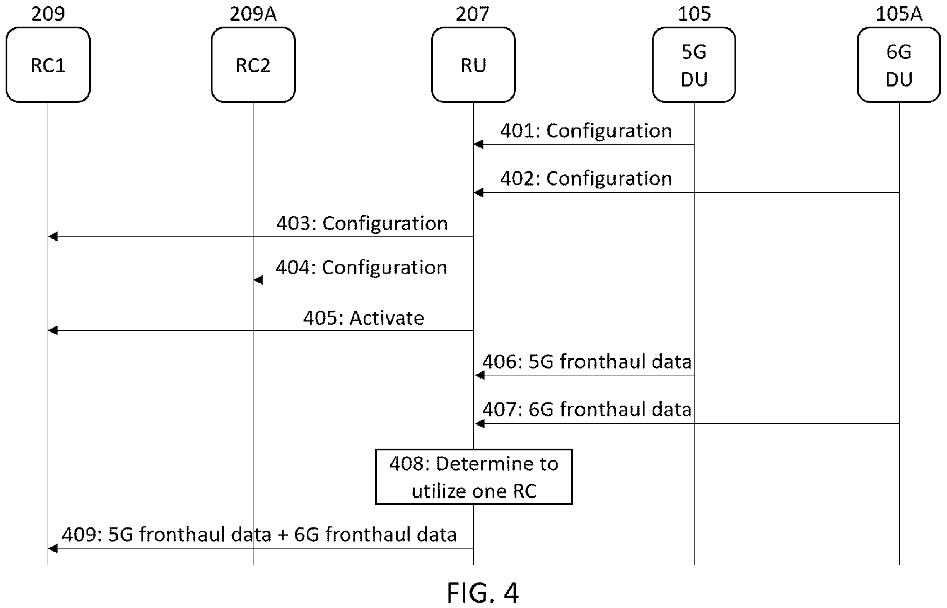

In the example embodiments shown in FIGS. 4-6, a radio unit 207 is shared between a 5G DU 105 and a 6G DU 105A. The radio unit 207 comprises two radio chains 209, 209A, and the radio unit 207 uses one or both of the radio chains for transmission or reception of 5G data and 6G data. The determination of whether to use one or both radio chains is performed in the radio unit 207. Initially, each radio chain 209, 209A is configured for at least one RAT of the MRSS cell 320, and only the first radio chain 209 is activated. As fronthaul data is received by the RU 207 from the DUs 105, 105A, the RU 207 determines whether to activate the second radio chain 209A or not.

Although two radio chains and two DUs are shown in FIGS. 4-6, it should be noted that the number of radio chains and DUs may also be more than two. In other words, there may be two or more radio chains, and two or more DUs. In addition, the signaling procedure illustrated in FIGS. 4-6 may be extended and applied according to the actual number of radio chains and DUs.

FIG. 4 illustrates a signal flow diagram according to an example embodiment. In this example embodiment, all the fronthaul data is transmitted to the first radio chain 209, and the second radio chain 209A remains deactivated.

Referring to FIG. 4, at 401, the 5G DU 105 transmits, to the RU 207, a first configuration for utilizing a first radio chain 209 of at least two radio chains 209, 209A for independent 5G use or shared use between 5G and 6G. The RU 207 receives the first configuration.

The first configuration may comprise configuration information for the first radio chain 209, such as center frequency, bandwidth, properties of a physical random-access channel (PRACH), waveform, etc.

At 402, the 6G DU 105A transmits, to the RU 207, a second configuration for utilizing a second radio chain 209A of the at least two radio chains 209, 209A for independent 6G use or shared use between 5G and 6G. The RU 207 receives the second configuration.

The second configuration may comprise configuration information for the second radio chain 209A, such as center frequency, bandwidth, properties of PRACH, waveform, etc.

In other words, at 401 and 402, the 5G DU 105 and the 6G DU 105A may configure the RU 207 for shared or independent radio chain usage (i.e., whether to share one radio chain between 5G and 6G, or to use separate radio chains for 5G and 6G) for an MRSS cell 320.

At 403, the RU 207 configures the first radio chain 209 based on the first configuration.

At 404, the RU 207 configures the second radio chain 209A based on the second configuration.

At 405, the RU 207 activates the first radio chain 209 (as an initial activation). The activation means preparing the first radio chain 209 such that data can be transmitted or received via the first radio chain 209. For example, the activation may comprise at least turning on a power amplifier of the first radio chain 209.

The second radio chain 209A may remain deactivated (i.e., in sleep mode with reduced power consumption). The deactivation means that the power amplifier of the second radio chain 209A is turned off completely, or that the power amplifier is put in a state where it can be turned on quickly. In other words, in the deactivated state, the second radio chain 209A is not available for transmission or reception.

At 406, the 5G DU 105 transmits, to the RU 207, a first set of fronthaul data associated with 5G. The RU 207 receives the first set of fronthaul data. The first set of fronthaul data may comprise a request for transmitting 5G downlink data, or a request for receiving 5G uplink data. In other words, the RU 207 receives, over the fronthaul interface, information of DL data to be transmitted or UL data to be received for the 5G cell of the MRSS cell 320.

For example, the first set of fronthaul data may comprise at least one of: one or more uplink random-access channel processing requirements for 5G, one or more 5G downlink waveforms requested to be transmitted, a peak-to-average power ratio requirement for transmitting the one or more 5G downlink waveforms, or one or more downlink transmission power requirements for transmitting the one or more 5G downlink waveforms.

At 407, the 6G DU 105A transmits, to the RU 207, a second set of fronthaul data associated with 6G. The second set of fronthaul data may comprise a request for transmitting 6G downlink data, or a request for receiving 6G uplink data. In other words, the RU 207 receives, over the fronthaul interface, information of DL data to be transmitted or UL data to be received for the 6G cell of the MRSS cell 320.

For example, the second set of fronthaul data may comprise at least one of: one or more uplink random-access channel processing requirements for 6G, one or more 6G downlink waveforms requested to be transmitted, a peak-to-average power ratio requirement for transmitting the one or more 6G downlink waveforms, or one or more downlink transmission power requirements for transmitting the one or more 6G downlink waveforms.

At 408, the RU 207 determines, based at least on the first set of fronthaul data and the second set of fronthaul data, whether to utilize one or more radio chains of at least two radio chains 209, 209A for spectrum sharing between 5G and 6G. In other words, after the initial configuration and activation of one radio chain 209, the RU 207 may decide, upon reception of transmit or receive requests from one or both DUs 105, 105A, whether to continue to use one radio chain 209, or to activate the second radio chain 209A and use both radio chains 209, 209A, or to deactivate the second radio chain 209A and use the first radio chain 209A.

The determination may be further based on one or more pre-defined policies or rules to help prioritize or determine whether to use a single (shared) radio chain or independent radio chains for 5G and 6G, and the RU 207 may provide counters and/or key performance indicators (KPIs) to monitor the determinations it makes.

In this example embodiment, the RU 207 determines to utilize one radio chain (e.g., the first radio chain 209) for the spectrum sharing.

As an example, the determination may be based at least on whether a single radio chain (e.g., the first radio chain 209) of the at least two radio chains is capable of transmitting the 5G and 6G downlink waveforms without degradation of an error vector magnitude (EVM) compared to utilizing more than one radio chain of the at least two radio chains for transmitting the 5G and 6G downlink waveforms. If the single radio chain is capable of transmitting the 5G and 6G downlink waveforms without degradation of the error vector magnitude, then the RU 207 may determine to utilize the single radio chain for the spectrum sharing (i.e., the other radio chain is not activated)

As another example, the determination may be based at least on whether a single radio chain (e.g., the first radio chain 209) of the at least two radio chains is capable of simultaneous transmission of the 5G and 6G downlink waveforms such that the peak-to-average power ratio requirement is fulfilled. If the single radio chain is capable of simultaneous transmission of the 5G and 6G downlink waveforms such that the peak-to-average power ratio requirement is fulfilled, then the RU 207 may determine to utilize the single radio chain for the spectrum sharing (i.e., the other radio chain is not activated). In case the first set of fronthaul data (5G fronthaul data) and the second set of fronthaul data (6G fronthaul data) comprise different peak-to-average power ratio requirements, then both the 5G peak-to-average power ratio requirement and the 6G peak-to-average power ratio requirement may need to be fulfilled by the single radio chain in order to utilize the single radio chain for the spectrum sharing.

As another example, the determination may be based at least on whether a single radio chain (e.g., the first radio chain 209) of the at least two radio chains is capable of fulfilling the one or more uplink random-access channel (RACH) processing requirements for overlapping random-access channel occasions of 5G and 6G. In other words, if both 5G and 6G have overlapping RACH occasions in a slot, the RU 207 may determine whether the RACH processing capabilities of a single radio chain will suffice. This may depend on the time window of the day, since during daytime the probability of having several UEs per RACH occasion is generally higher than at night. Therefore, based on the time of day (e.g., at night), it may be possible to deactivate a radio chain without negatively impacting the blocking rate in the RACH procedure. If the single radio chain is capable of fulfilling the one or more uplink random-access channel processing requirements, then the RU 207 may determine to utilize the single radio chain for the spectrum sharing (i.e., the other radio chain is not activated). In case the first set of fronthaul data (5G fronthaul data) and the second set of fronthaul data (6G fronthaul data) comprise different RACH processing requirements, then both the 5G RACH processing requirements and the 6G RACH processing requirements may need to be fulfilled by the single radio chain in order to utilize the single radio chain for the spectrum sharing.

At 409, based on determining to utilize one radio chain for the spectrum sharing, the radio unit 207 transmits the first set of fronthaul data (5G data) and the second set of fronthaul data (6G data) to one radio chain (e.g., the first radio chain 209) of the at least two radio chains 209, 209A.

FIG. 5 illustrates a signal flow diagram according to the claimed invention.

The RU 207 determines to activate the second radio chain 209A, in which case the first radio chain 209 receives one set of fronthaul data, and the second radio chain 209A receives a second set of fronthaul data.

Referring to FIG. 5, at 501, the 5G DU 105 transmits, to the RU 207, a first configuration for utilizing a first radio chain 209 of at least two radio chains 209, 209A for independent 5G use or shared use between 5G and 6G. The RU 207 receives the first configuration.

The first configuration may comprise configuration information for the first radio chain 209, such as center frequency, bandwidth, properties of PRACH, waveform, etc.

At 502, the 6G DU 105A transmits, to the RU 207, a second configuration for utilizing a second radio chain 209A of the at least two radio chains 209, 209A for independent 6G use or shared use between 5G and 6G. The RU 207 receives the second configuration.

The second configuration may comprise configuration information for the second radio chain 209A, such as center frequency, bandwidth, properties of PRACH, waveform, etc.

In other words, at 501 and 502, the 5G DU 105 and the 6G DU 105A configures the RU 207 for shared or independent radio chain usage (i.e., whether to share one radio chain between 5G and 6G, or to use separate radio chains for 5G and 6G) for an MRSS cell 320.

At 503, the RU 207 configures the first radio chain 209 based on the first configuration.

At 504, the RU 207 configures the second radio chain 209A based on the second configuration.

At 505, the RU 207 activates the first radio chain 209 (as an initial activation). The activation means preparing the first radio chain 209 such that data can be transmitted or received via the first radio chain 209. For example, the activation may comprise at least turning on a power amplifier of the first radio chain 209.

The second radio chain 209A may remain deactivated (i.e., in sleep mode with reduced power consumption). The deactivation means that the power amplifier of the second radio chain 209A is turned off completely, or that the power amplifier is put in a state where it can be turned on quickly. In other words, in the deactivated state, the second radio chain 209A is not available for transmission or reception.

At 506, the 5G DU 105 transmits, to the RU 207, a first set of fronthaul data associated with 5G. The RU 207 receives the first set of fronthaul data. The first set of fronthaul data may comprise a request for transmitting 5G downlink data, or a request for receiving 5G uplink data. In other words, the RU 207 receives, over the fronthaul interface, information of DL data to be transmitted or UL data to be received for the 5G cell of the MRSS cell 320.

For example, the first set of fronthaul data may comprise at least one of: one or more uplink random-access channel processing requirements for 5G, one or more 5G downlink waveforms requested to be transmitted, a peak-to-average power ratio requirement for transmitting the one or more 5G downlink waveforms, or one or more downlink transmission power requirements for transmitting the one or more 5G downlink waveforms.

At 507, the 6G DU 105A transmits, to the RU 207, a second set of fronthaul data associated with 6G. The second set of fronthaul data may comprise a request for transmitting 6G downlink data, or a request for receiving 6G uplink data. In other words, the RU 207 receives, over the fronthaul interface, information of DL data to be transmitted or UL data to be received for the 6G cell of the MRSS cell 320.

For example, the second set of fronthaul data may comprise at least one of: one or more uplink random-access channel processing requirements for 6G, one or more 6G downlink waveforms requested to be transmitted, a peak-to-average power ratio requirement for transmitting the one or more 6G downlink waveforms, or one or more downlink transmission power requirements for transmitting the one or more 6G downlink waveforms.

At 508, the RU 207 determines, based at least on the first set of fronthaul data and the second set of fronthaul data, whether to utilize one or more radio chains of at least two radio chains 209, 209A for spectrum sharing between 5G and 6G. In other words, after the initial configuration and activation of one radio chain 209, the RU 207 may decide, upon reception of transmit or receive requests from one or both DUs 105, 105A, whether to continue to use one radio chain 209, or to activate the second radio chain 209A and use both radio chains 209, 209A, or to deactivate the second radio chain 209A and use the first radio chain 209A.

The determination may be further based on one or more pre-defined policies or rules to help prioritize or determine whether to use a single (shared) radio chain or independent radio chains for 5G and 6G, and the RU 207 may provide counters and/or key performance indicators (KPIs) to monitor the determinations it makes.

In this example embodiment, the RU 207 determines to utilize both radio chains 209, 209A for the spectrum sharing.

As an example, if a single radio chain is not capable of transmitting the 5G and 6G downlink waveforms without degradation of the error vector magnitude, then the RU 207 may determine to utilize both radio chains for the spectrum sharing.

As another example, if a single radio chain is not capable of simultaneous transmission of the 5G and 6G downlink waveforms such that the peak-to-average power ratio requirement is fulfilled, then the RU 207 may determine to utilize both radio chains for the spectrum sharing.

As another example, if a single radio chain is not capable of fulfilling the one or more uplink random-access channel processing requirements for overlapping random-access channel occasions of 5G and 6G, then the RU 207 may determine to utilize both radio chains for the spectrum sharing.

At 509, based on determining to utilize both radio chains for the spectrum sharing, the radio unit 207 transmits the first set of fronthaul data (5G data) to the first radio chain 209.

At 510, based on determining to utilize both radio chains for the spectrum sharing, the radio unit 207 activates the deactivated second radio chain 209A. The activation means preparing the second radio chain 209A such that data can be transmitted or received via the second radio chain 209A. For example, the activation may comprise at least turning on the power amplifier of the second radio chain 209A.

At 511, based on determining to utilize both radio chains for the spectrum sharing, the radio unit 207 transmits the second set of fronthaul data (6G data) to the second radio chain 209A after the activation.

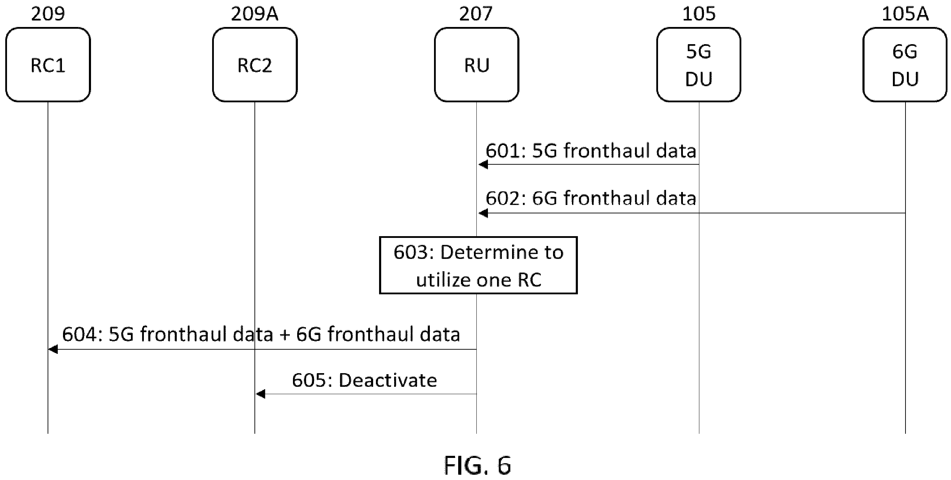

FIG. 6 illustrates a signal flow diagram according to an example embodiment, wherein two radio chains 209, 209A have been previously activated (e.g., due to a previous execution of the example embodiment of FIG. 5). In this example embodiment, the first radio chain 209 receives all of the fronthaul data for transmission or reception, and the second radio chain 209A is deactivated.

Referring to FIG. 6, at 601, the 5G DU 105 transmits, to the RU 207, a first set of fronthaul data associated with 5G. The RU 207 receives the first set of fronthaul data. The first set of fronthaul data may comprise a request for transmitting 5G downlink data, or a request for receiving 5G uplink data. In other words, the RU 207 receives, over the fronthaul interface, information of DL data to be transmitted or UL data to be received for the 5G cell of the MRSS cell 320.

For example, the first set of fronthaul data may comprise at least one of: one or more uplink random-access channel processing requirements for 5G, one or more 5G downlink waveforms requested to be transmitted, a peak-to-average power ratio requirement for transmitting the one or more 5G downlink waveforms, or one or more downlink transmission power requirements for transmitting the one or more 5G downlink waveforms.

At 602, the 6G DU 105A transmits, to the RU 207, a second set of fronthaul data associated with 6G. The second set of fronthaul data may comprise a request for transmitting 6G downlink data, or a request for receiving 6G uplink data. In other words, the RU 207 receives, over the fronthaul interface, information of DL data to be transmitted or UL data to be received for the 6G cell of the MRSS cell 320.

For example, the second set of fronthaul data may comprise at least one of: one or more uplink random-access channel processing requirements for 6G, one or more 6G downlink waveforms requested to be transmitted, a peak-to-average power ratio requirement for transmitting the one or more 6G downlink waveforms, or one or more downlink transmission power requirements for transmitting the one or more 6G downlink waveforms.

At 603, the RU 207 determines, based at least on the first set of fronthaul data and the second set of fronthaul data, whether to utilize one or more radio chains of at least two radio chains 209, 209A for spectrum sharing between 5G and 6G. In other words, after the initial configuration and activation of one radio chain 209, the RU 207 may decide, upon reception of transmit or receive requests from one or both DUs 105, 105A, whether to continue to use one radio chain 209, or to activate the second radio chain 209A and use both radio chains 209, 209A, or to deactivate the second radio chain 209A and use the first radio chain 209A.

The determination may be further based on one or more pre-defined policies or rules to help prioritize or determine whether to use a single (shared) radio chain or independent radio chains for 5G and 6G, and the RU 207 may provide counters and/or key performance indicators (KPIs) to monitor the determinations it makes.

In this example embodiment, the RU 207 determines to utilize one radio chain (e.g., the first radio chain 209) for the spectrum sharing. Some examples of how to make the determination are described above (e.g., at 408 of FIG. 4).

At 604, based on determining to utilize one radio chain (e.g., the first radio chain 209) for the spectrum sharing, the radio unit 207 transmits the first set of fronthaul data (5G data) and the second set of fronthaul data (6G data) to one radio chain (e.g., the first radio chain 209) of the at least two radio chains 209, 209A.

At 605, based on determining to utilize one radio chain (e.g., the first radio chain 209) for the spectrum sharing, the radio unit 207 deactivates the second radio chain 209A. The deactivation may mean that the second radio chain is put into sleep mode.

In the example embodiments described above with reference to FIGS. 4-6, the radio unit 207 activates or deactivates a given radio chain 209, 209A with an explicit activation or deactivation command. However, instead of an explicit activation or deactivation command, the activation or deactivation of a given radio chain 209, 209A may alternatively be implicit based on whether or not the radio chain 209, 209A receives fronthaul data from the radio unit 207. In this case, the radio unit 207 may activate a given radio chain 209, 209A by transmitting fronthaul data to that radio chain. On the other hand, if the radio chain 209, 209A does not receive any fronthaul data from the radio unit 207 within a certain time limit, then the radio chain 209, 209A may deactivate itself.

Furthermore, in the example embodiments described above with reference to FIGS. 4-6, the radio unit 207 receives fronthaul data from two RATs (i.e., from the 5G DU 105 and the 6G DU 105A). However, in another embodiment, the radio unit 207 may receive fronthaul data from just one RAT (e.g., from the 5G DU 105 or from the 6G DU 105A, but not from both). In case the radio unit 207 receives fronthaul data from just one RAT, the radio unit 207 may determine to utilize just one radio chain 209 and deactivate the other radio chain 209A.

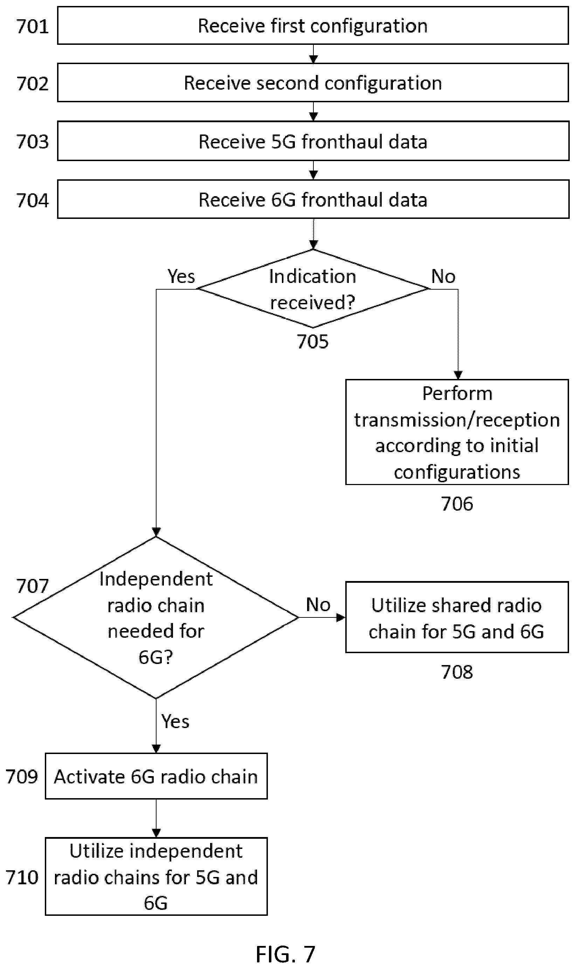

FIG. 7 illustrates a flow chart according to an example embodiment of a method performed by an apparatus 900. For example, the apparatus 900 may be, or comprise, or be comprised in, a radio unit 207 shared between two or more radio access technologies.

Referring to FIG. 7, in block 701, the RU 207 receives (e.g., from the 5G DU 105) a first configuration for utilizing a first radio chain 209 of atleast two radio chains 209, 209A for independent 5G use or shared use between 5G and 6G. The RU 207 configures the first radio chain 209 based on the first configuration.

In block 702, the RU receives a second configuration (e.g., from the 6G DU 105A) for utilizing a second radio chain 209A of the at least two radio chains 209, 209A for independent 6G use or shared use between 5G and 6G. The RU 207 configures the second radio chain 209A based on the second configuration.

In other words, in blocks 701 and 702, the 5G DU 105 and the 6G DU 105A may configure the RU 207 for shared or independent radio chain usage (i.e., whether to share one radio chain between 5G and 6G, or to use separate radio chains for 5G and 6G).

In block 703, the RU 207 receives (e.g., from the 5G DU 105) a first set of fronthaul data associated with 5G. The first set of fronthaul data may comprise a request for transmitting 5G downlink data, or a request for receiving 5G uplink data. In other words, the RU 207 receives, over the fronthaul interface, information of DL data to be transmitted or UL data to be received for the 5G cell of the MRSS cell 320.

In block 704, the RU 207 receives (e.g., from the 6G DU 105A) a second set of fronthaul data associated with 6G. The second set of fronthaul data may comprise a request for transmitting 6G downlink data, or a request for receiving 6G uplink data. In other words, the RU 207 receives, over the fronthaul interface, information of DL data to be transmitted or UL data to be received for the 6G cell of the MRSS cell 320.

In other words, in block 703 and 704, the RU 207 receives, over the fronthaul interface, information of DL data to be transmitted or UL data to be received for the 5G cell and the 6G cell for a specific time slot. The fronthaul data may comprise at least one of user-plane data and/or control-plane data.

In block 705, the RU 207 determines whether an indication has been received (e.g., from the 5G DU 105 or the 6G DU 105A) for initiating a determination of whether to utilize a shared radio chain or an independent radio chain for 6G transmission or reception.

In block 706, if no indication has been received (block 705: no), then the RU 207 performs transmission or reception for the 5G cell and the 6G cell according to the first configuration and the second configuration. In other words, if the first configuration and the second configuration indicated to use a shared radio chain (e.g., the first radio chain 209) for spectrum sharing between 5G and 6G, then the RU 207 may transmit the first set of fronthaul data and the second set of fronthaul data to the shared radio chain. Alternatively, if the first configuration and the second configuration indicated to use independent radio chains for 5G and 6G, then the RU 207 may transmit the first set of fronthaul data to the first radio chain 209, and the RU 207 may transmit the second set of fronthaul data to the second radio chain 209A.

Alternatively, in block 707, if the indication has been received (block 705: yes), then the RU 207 determines whether an independent radio chain is needed for 6G transmission or reception. In other words, the RU 207 determines whether to utilize one or more radio chains of the at least two radio chains 209, 209A for spectrum sharing between 5G and 6G, wherein the determination may be initiated based on receiving the indication.

In block 708, if the RU 207 determines that the independent radio chain is not needed for 6G transmission or reception (block 706: no), then the RU 207 performs transmission or reception for the 5G cell and the 6G cell on the shared radio chain (e.g., the first radio chain 209). In this case, the RU 207 utilizes a single radio chain 209 for spectrum sharing between 5G and 6G. In other words, the RU 207 may transmit the first set of fronthaul data and the second set of fronthaul data to the shared radio chain 209.

Alternatively, in block 709, if the RU 207 determines that the independent radio chain is needed for 6G transmission or reception (block 706: yes), then the RU 207 may activate the second radio chain 209A (i.e., bring the second radio chain 209A out of the sleep mode, if it was previously in the sleep mode).

In block 710, if the RU 207 determines that the independent radio chain is needed for 6G transmission or reception (block 706: yes), then the RU 207 performs transmission or reception for the 5G cell and the 6G cell on independent radio chains. In this case, the RU 207 utilizes two radio chains 209, 209A for spectrum sharing between 5G and 6G. In other words, the RU 207 may transmit the first set of fronthaul data to the first radio chain 209, and the RU 207 may transmit the second set of fronthaul data to the second radio chain 209A.

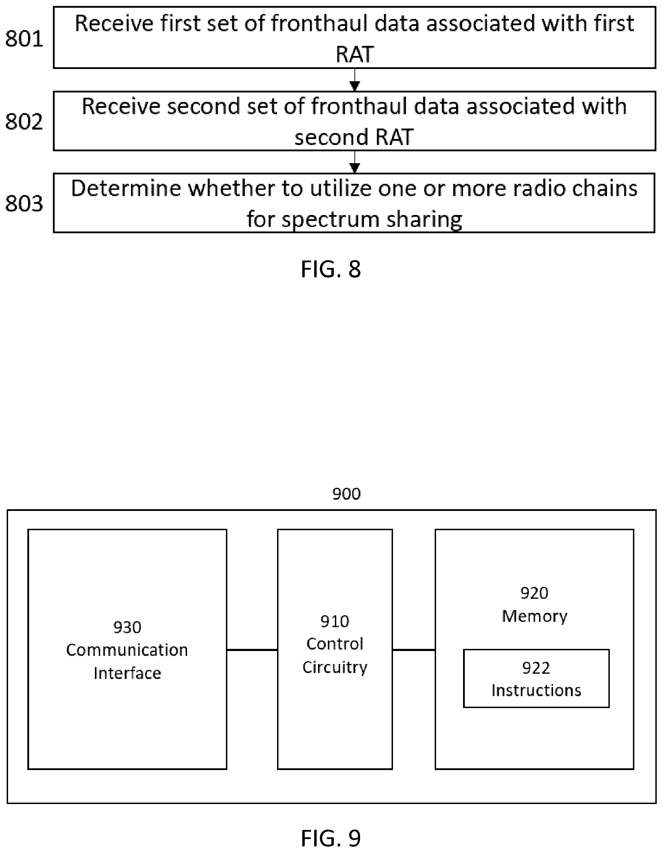

FIG. 8 illustrates a flow chart according to an example embodiment of a method performed by an apparatus 900. For example, the apparatus 900 may be, or comprise, or be comprised in, a radio unit 207 shared between two or more radio access technologies.

Referring to FIG. 8, in block 801, the apparatus receives a first set of fronthaul data associated with a first radio access technology.

In block 802, the apparatus receives a second set of fronthaul data associated with a second radio access technology different from the first radio access technology.

For example, the first set of fronthaul data may be received from a first distributed unit 105 associated with the first radio access technology, and the second set of fronthaul data may be received from a second distributed unit 105A associated with the second radio access technology.

Alternatively, the first set of fronthaul data and the second set of fronthaul data may be received from a single distributed unit 105.

Herein the terms "first fronthaul data" and "second fronthaul data" are used to distinguish the data, and they do not necessarily mean a specific order of the data. Similarly, the terms "first distributed unit" and "second distributed unit" are used to distinguish the distributed units, and they do not necessarily mean a specific order or specific identifiers of the distributed units. Similarly, the terms "first radio access technology" and "second radio access technology" are used to distinguish the radio access technologies.

For example, the first radio access technology may comprise a fifth generation (5G) radio access technology, and the second radio access technology may comprise a sixth generation (6G) radio access technology, or vice versa.

As another example, the first radio access technology may comprise a fourth generation (4G) radio access technology, and the second radio access technology may comprise a fifth generation (5G) radio access technology, or vice versa.

As another example, the first radio access technology may comprise a fourth generation (4G) radio access technology, and the second radio access technology may comprise a sixth generation (6G) radio access technology, or vice versa.

In block 803, the apparatus determines, based at least on the first set of fronthaul data and the second set of fronthaul data, whether to utilize one or more radio chains of at least two radio chains 209, 209A for spectrum sharing between at least the first radio access technology and the second radio access technology.

The determination may be based on at least one of: one or more uplink random-access channel processing requirements, one or more downlink waveforms requested to be transmitted, a peak-to-average power ratio requirement for transmitting the one or more downlink waveforms, or one or more downlink transmission power requirements for transmitting the one or more downlink waveforms. These requirements and requests may be included in the first fronthaul data and/or the second fronthaul data.

As an example, the determination may be based at least on whether a single radio chain of the at least two radio chains is capable of transmitting the one or more downlink waveforms without degradation of an error vector magnitude compared to utilizing more than one radio chain of the at least two radio chains for transmitting the one or more downlink waveforms. If the single radio chain is capable of transmitting the one or more downlink waveforms without degradation of the error vector magnitude, then the apparatus may determine to utilize the single radio chain (i.e., one radio chain) for the spectrum sharing. Otherwise, the apparatus may determine to utilize two or more radio chains for the spectrum sharing.

As another example, the determination may be based at least on whether a single radio chain of the at least two radio chains is capable of simultaneous transmission of the one or more downlink waveforms such that the peak-to-average power ratio requirement is fulfilled, wherein the one or more downlink waveforms may comprise at least one downlink waveform associated with the first radio access technology, and at least one downlink waveform associated with the second radio access technology. If the single radio chain is capable of the simultaneous transmission of the one or more downlink waveforms such that the peak-to-average power ratio requirement is fulfilled, then the apparatus may determine to utilize the single radio chain (i.e., one radio chain) for the spectrum sharing. Otherwise, the apparatus may determine to utilize two or more radio chains for the spectrum sharing.

As another example, the determination may be based at least on whether a single radio chain of the at least two radio chains is capable of fulfilling the one or more uplink random-access channel processing requirements for overlapping random-access channel occasions of the first radio access technology and the second radio access technology. If the single radio chain is capable of fulfilling the one or more uplink random-access channel processing requirements, then the apparatus may determine to utilize the single radio chain (i.e., one radio chain) for the spectrum sharing. Otherwise, the apparatus may determine to utilize two or more radio chains for the spectrum sharing.

The apparatus may activate at least one deactivated radio chain of the at least two radio chains 209, 209A based on the determination. For example, the apparatus may determine to utilize two or more radio chains for the spectrum sharing, and one of these radio chains may have been previously deactivated, in which case the apparatus may activate the deactivated radio chain. The activation means preparing the at least one deactivated radio chain such that data can be transmitted or received via the at least one radio chain. For example, the activation may comprise at least turning on a power amplifier of the at least one deactivated radio chain.

Alternatively, or additionally, the apparatus may deactivate at least one radio chain of the at least two radio chains 209, 209A based on the determination. The deactivation may comprise, for example, turning off a power amplifier of the at least one radio chain. For example, the apparatus may determine to utilize one radio chain for the spectrum sharing, in which case the other radio chain(s) may be deactivated (if they were previously activated).

The apparatus may transmit the first set of fronthaul data and the second set of fronthaul data to one (activated) radio chain of the at least two radio chains 209, 209A based on the determination (e.g., based on determining to utilize just the one radio chain for the spectrum sharing). In this case, the other radio chain(s) may be deactivated.

Alternatively, the apparatus may transmit the first set of fronthaul data to a first radio chain 209 of the at least two radio chains 209, 209A based on the determination, and transmit the second set of fronthaul data to a second radio chain 209A of the at least two radio chains 209, 209A based on the determination (e.g., based on determining to utilize two or more radio chains for the spectrum sharing).

Herein the terms "first radio chain" and "second radio chain" are used to distinguish the radio chains, and they do not necessarily mean a specific order or specific identifiers of the radio chains.

Prior to receiving the first set of fronthaul data and the second set of fronthaul data, the apparatus may receive a first configuration, for example from the first distributed unit 105, for utilizing a first radio chain 209 of the at least two radio chains 209, 209A for at least one of the first radio access technology or the second radio access technology. The apparatus may further receive a second configuration, for example from the second distributed unit 105A, for utilizing a second radio chain 209A of the at least two radio chains 209, 209A for at least one of the first radio access technology or the second radio access technology. The apparatus may configure the first radio chain 209 based on the first configuration (as an initial configuration), and the apparatus may configure the second radio chain 209A based on the second configuration (as an initial configuration).

Herein the terms "first configuration" and "second configuration" are used to distinguish the configurations, and they do not necessarily mean a specific order of the configurations.

The apparatus may receive an indication, for example from the first distributed unit 105 or the second distributed unit 105A, for initiating the determination. In this case, the apparatus may initiate the determination of block 803 based on receiving the indication.

The blocks, related functions, and information exchanges described above by means of FIGS. 4-8 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

FIG. 9 illustrates an example of an apparatus 900 comprising means for performing one or more of the example embodiments described above. For example, the apparatus 900 may be an apparatus such as, or comprising, or comprised in, a radio unit 207. The radio unit 207 may also be referred to as a remote radio head (RRH) or a transmission and reception point (TRP).

The apparatus 900 may comprise, for example, a circuitry or a chipset applicable for realizing one or more of the example embodiments described above. The apparatus 900 may be an electronic device comprising one or more electronic circuitries. The apparatus 900 may comprise a communication control circuitry 910 such as at least one processor, and at least one memory 920 storing instructions 922 which, when executed by the at least one processor, cause the apparatus 900 to carry out one or more of the example embodiments described above. Such instructions 922 may, for example, include computer program code (software). The at least one processor and the at least one memory storing the instructions may provide the means for providing or causing the performance of any of the methods and/or blocks described above.

The processor is coupled to the memory 920. The processor is configured to read and write data to and from the memory 920. The memory 920 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 920 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 920 or, alternatively or additionally, they may be received, by the apparatus, via an electromagnetic carrier signal and/or may be copied from a physical entity such as a computer program product. Execution of the computer readable instructions causes the apparatus 900 to perform one or more of the functionalities described above.

The memory 920 may be implemented using any suitable data storage technology, such as semiconductor-based memory devices, flash memory, magnetic memory devices and systems, optical memory devices and systems, fixed memory and/or removable memory.

The apparatus 900 may further comprise or be connected to hardware and/or software for realizing communication connectivity with one or more wireless communication devices according to one or more communication protocols. The communication interface 930 may provide means for performing some of the blocks for one or more example embodiments described above.

The communication interface 930 may comprise at least two radio chains that may be integrated to the apparatus 900 or that the apparatus 900 may be connected to. The communication interface 930 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 930 provides the apparatus with radio communication capabilities to communicate in the wireless communication network. The communication interface may, for example, provide a radio interface to one or more UEs 100, 102.

The apparatus 900 may further comprise or be connected to another interface towards one or more DUs 105, 105A.

It is to be noted that the apparatus 900 may further comprise various components not illustrated in FIG. 9. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus (900) comprising:
means for receiving a first set of fronthaul data associated with a first radio access technology;
means for receiving a second set of fronthaul data associated with a second radio access technology different from the first radio access technology; and **characterized in**
means for determining, based at least on the first set of fronthaul data and the second set of fronthaul data, whether to utilize one or more radio chains of at least two radio chains (209, 209A) for spectrum sharing between at least the first radio access technology and the second radio access technology.

2. The apparatus (900) according to claim 1, further comprising means for activating at least one deactivated radio chain of the at least two radio chains (209, 209A) based on the determination.

3. The apparatus (900) according to any preceding claim, further comprising means for deactivating at least one radio chain of the at least two radio chains (209, 209A) based on the determination.

4. The apparatus (900) according to any preceding claim, further comprising means for transmitting the first set of fronthaul data and the second set of fronthaul data to one radio chain of the at least two radio chains (209, 209A) based on the determination.

5. The apparatus (900) according to any of claims 1-3, further comprising:
means for transmitting the first set of fronthaul data to a first radio chain (209) of the at least two radio chains (209, 209A) based on the determination; and
means for transmitting the second set of fronthaul data to a second radio chain (209A) of the at least two radio chains (209, 209A) based on the determination.

6. The apparatus (900) according to any preceding claim, wherein the determination is based on at least one of: one or more uplink random-access channel processing requirements, one or more downlink waveforms requested to be transmitted, a peak-to-average power ratio requirement for transmitting the one or more downlink waveforms, or one or more downlink transmission power requirements for transmitting the one or more downlink waveforms.

7. The apparatus (900) according to claim 6, wherein the determination is based at least on whether a single radio chain of the at least two radio chains (209, 209A) is capable of transmitting the one or more downlink waveforms without degradation of an error vector magnitude compared to utilizing more than one radio chain of the at least two radio chains (209, 209A) for transmitting the one or more downlink waveforms.

8. The apparatus (900) according to any of claims 6-7, wherein the determination is based at least on whether a single radio chain of the at least two radio chains (209, 209A) is capable of simultaneous transmission of the one or more downlink waveforms such that the peak-to-average power ratio requirement is fulfilled,
wherein the one or more downlink waveforms comprise at least one downlink waveform associated with the first radio access technology, and at least one downlink waveform associated with the second radio access technology.

9. The apparatus (900) according to any of claims 6-8, wherein the determination is based at least on whether a single radio chain of the at least two radio chains (209, 209A) is capable of fulfilling the one or more uplink random-access channel processing requirements for overlapping random-access channel occasions of the first radio access technology and the second radio access technology.

10. The apparatus (900) according to any preceding claim, further comprising:
means for receiving a first configuration for utilizing a first radio chain (209) of the at least two radio chains (209, 209A) for at least one of the first radio access technology or the second radio access technology;
means for receiving a second configuration for utilizing a second radio chain (209A) of the at least two radio chains (209, 209A) for at least one of the first radio access technology or the second radio access technology;
means for configuring the first radio chain (209) based on the first configuration; and
means for configuring the second radio chain (209A) based on the second configuration.

11. The apparatus (900) according to any preceding claim, further comprising:
means for receiving an indication for initiating the determination; and
means for initiating the determination based on receiving the indication.

12. The apparatus (900) according to any preceding claim, wherein the apparatus comprises a radio unit (207) shared between at least the first radio access technology and the second radio access technology.

13. The apparatus (900) according to any preceding claim, wherein the first set of fronthaul data is received from a first distributed unit (105) associated with the first radio access technology, and
wherein the second set of fronthaul data is received from a second distributed unit (105A) associated with the second radio access technology.

14. The apparatus (900) according to any of claims 1-12, wherein the first set of fronthaul data and the second set of fronthaul data are received from a single distributed unit (105).

15. The apparatus (900) according to any preceding claim, wherein the first radio access technology comprises a fifth generation, 5G, radio access technology, and the second radio access technology comprises a sixth generation, 6G, radio access technology.

16. The apparatus (900) according to any of claims 1-14, wherein the first radio access technology comprises a fourth generation, 4G, radio access technology, and the second radio access technology comprises a fifth generation, 5G, radio access technology.

17. The apparatus (900) according to any of claims 1-14, wherein the first radio access technology comprises a fourth generation, 4G, radio access technology, and the second radio access technology comprises a sixth generation, 6G, radio access technology.

18. A method comprising:
receiving (406, 506, 606, 703, 801) a first set of fronthaul data associated with a first radio access technology;
receiving (407, 507, 607, 704, 802) a second set of fronthaul data associated with a second radio access technology different from the first radio access technology; and **characterized in**
determining (408, 508, 608, 707, 803), based at least on the first set of fronthaul data and the second set of fronthaul data, whether to utilize one or more radio chains of at least two radio chains for spectrum sharing between at least the first radio access technology and the second radio access technology.

19. A computer program comprising instructions which, when executed by an apparatus (900), cause the apparatus (900) to perform at least the following:
receiving a first set of fronthaul data associated with a first radio access technology;
receiving a second set of fronthaul data associated with a second radio access technology different from the first radio access technology; and **characterized in**
determining, based at least on the first set of fronthaul data and the second set of fronthaul data, whether to utilize one or more radio chains of at least two radio chains (209, 209A) for spectrum sharing between at least the first radio access technology and the second radio access technology.

## Patentansprüche

1. Vorrichtung (900), umfassend:
Mittel zum Empfangen eines ersten Satzes von Fronthaul-Daten, die einer ersten Funkzugangstechnologie zugeordnet sind;
Mittel zum Empfangen eines zweiten Satzes von Fronthaul-Daten, die einer zweiten Funkzugangstechnologie zugeordnet sind, die sich von der ersten Funkzugangstechnologie unterscheidet; und
**dadurch gekennzeichnet, dass** sie umfasst
Mittel zum Bestimmen, zumindest auf der Grundlage des ersten Satzes von Fronthaul-Daten und des zweiten Satzes von Fronthaul-Daten, ob eine oder mehrere Funkverkettungen von mindestens zwei Funkverkettungen (209, 209A) für eine Spektrumsteilung zwischen zumindest der ersten Funkzugangstechnologie und der zweiten Funkzugangstechnologie zu nutzen sind.

2. Vorrichtung (900) nach Anspruch 1, ferner umfassend Mittel zum Aktivieren mindestens einer deaktivierten Funkverkettung der mindestens zwei Funkverkettungen (209, 209A) auf der Grundlage der Bestimmung.

3. Vorrichtung (900) nach einem der vorhergehenden Ansprüche, ferner umfassend Mittel zum Deaktivieren mindestens einer Funkverkettung der mindestens zwei Funkverkettungen (209, 209A) auf der Grundlage der Bestimmung.

4. Vorrichtung (900) nach einem der vorhergehenden Ansprüche, ferner umfassend Mittel zum Übertragen des ersten Satzes von Fronthaul-Daten und des zweiten Satzes von Fronthaul-Daten an eine Funkverkettung der mindestens zwei Funkverkettungen (209, 209A) auf der Grundlage der Bestimmung.

5. Vorrichtung (900) nach einem der Ansprüche 1 bis 3, ferner umfassend:
Mittel zum Übertragen des ersten Satzes von Fronthaul-Daten an eine erste Funkverkettung (209) der mindestens zwei Funkverkettungen (209, 209A) auf der Grundlage der Bestimmung; und
Mittel zum Übertragen des zweiten Satzes von Fronthaul-Daten an eine zweite Funkverkettung (209A) der mindestens zwei Funkverkettungen (209, 209A) auf der Grundlage der Bestimmung.

6. Vorrichtung (900) nach einem der vorhergehenden Ansprüche, wobei die Bestimmung auf mindestens einem der Folgenden basiert: einer oder mehreren Uplink-Direktzugriffskanal-Verarbeitungsanforderungen, einer oder mehreren Downlink-Wellenformen, deren Übertragung angefordert wird, einer Spitzenwert-zu-Mittelwert-Leistungsverhältnis-Anforderung für die Übertragung der einen oder mehreren Downlink-Wellenformen, oder einer oder mehreren Downlink-Übertragungsleistungsanforderungen für die Übertragung der einen oder mehreren Downlink-Wellenformen.

7. Vorrichtung (900) nach Anspruch 6, wobei die Bestimmung zumindest darauf basiert, ob eine einzelne Funkverkettung der mindestens zwei Funkverkettungen (209, 209A) in der Lage ist, die eine oder die mehreren Downlink-Wellenformen ohne Verschlechterung einer Fehlervektorgröße zu übertragen, verglichen mit der Nutzung von mehr als einer Funkverkettung der mindestens zwei Funkverkettungen (209, 209A) zur Übertragung der einen oder mehreren Downlink-Wellenformen.

8. Vorrichtung (900) nach einem der Ansprüche 6 bis 7, wobei die Bestimmung zumindest darauf basiert, ob eine einzelne Funkverkettung der mindestens zwei Funkverkettungen (209, 209A) zur gleichzeitigen Übertragung der einen oder mehreren Downlink-Wellenformen in der Lage ist, so dass die Spitzenwert-zu-Mittelwert-Leistungsverhältnis-Anforderung erfüllt ist,
wobei die eine oder die mehreren Downlink-Wellenformen mindestens eine der ersten Funkzugangstechnologie zugeordnete Downlink-Wellenform und mindestens eine der zweiten Funkzugangstechnologie zugeordnete Downlink-Wellenform umfassen.

9. Vorrichtung (900) nach einem der Ansprüche 6 bis 8, wobei die Bestimmung zumindest darauf basiert, ob eine einzelne Funkverkettung der mindestens zwei Funkverkettungen (209, 209A) in der Lage ist, die eine oder die mehreren Uplink-Direktzugriffskanal-Verarbeitungsanforderungen für überlappende Direktzugriffskanalanlässe der ersten Funkzugangstechnologie und der zweiten Funkzugangstechnologie zu erfüllen.

10. Vorrichtung (900) nach einem der vorhergehenden Ansprüche, ferner umfassend:
Mittel zum Empfangen einer ersten Konfiguration zur Nutzung einer ersten Funkverkettung (209) der mindestens zwei Funkverkettungen (209, 209A) für mindestens eine der ersten Funkzugangstechnologie oder der zweiten Funkzugangstechnologie;
Mittel zum Empfangen einer zweiten Konfiguration zur Nutzung einer zweiten Funkverkettung (209A) der mindestens zwei Funkverkettungen (209, 209A) für mindestens eine der ersten Funkzugangstechnologie oder der zweiten Funkzugangstechnologie;
Mittel zum Konfigurieren der ersten Funkverkettung (209) auf der Grundlage der ersten Konfiguration; und
Mittel zum Konfigurieren der zweiten Funkverkettung (209A) auf der Grundlage der zweiten Konfiguration.

11. Vorrichtung (900) nach einem der vorhergehenden Ansprüche, ferner umfassend:
Mittel zum Empfangen einer Anzeige zum Einleiten der Bestimmung; und
Mittel zum Einleiten der Bestimmung auf der Grundlage des Empfangs der Anzeige.

12. Vorrichtung (900) nach einem der vorhergehenden Ansprüche, wobei die Vorrichtung eine Funkeinheit (207) umfasst, die zwischen zumindest der ersten Funkzugangstechnologie und der zweiten Funkzugangstechnologie geteilt wird.

13. Vorrichtung (900) nach einem der vorhergehenden Ansprüche, wobei der erste Satz von Fronthaul-Daten von einer ersten verteilten Einheit (105) empfangen wird, die der ersten Funkzugangstechnologie zugeordnet ist, und
wobei der zweite Satz von Fronthaul-Daten von einer zweiten verteilten Einheit (105A) empfangen wird, die der zweiten Funkzugangstechnologie zugeordnet ist.

14. Vorrichtung (900) nach einem der Ansprüche 1 bis 12, wobei der erste Satz von Fronthaul-Daten und der zweite Satz von Fronthaul-Daten von einer einzigen verteilten Einheit (105) empfangen werden.

15. Vorrichtung (900) nach einem der vorhergehenden Ansprüche, wobei die erste Funkzugangstechnologie eine Funkzugangstechnologie der fünften Generation, 5G, umfasst und die zweite Funkzugangstechnologie eine Funkzugangstechnologie der sechsten Generation, 6G, umfasst.

16. Vorrichtung (900) nach einem der Ansprüche 1 bis 14, wobei die erste Funkzugangstechnologie eine Funkzugangstechnologie der vierten Generation, 4G, umfasst und die zweite Funkzugangstechnologie eine Funkzugangstechnologie der fünften Generation, 5G, umfasst.

17. Vorrichtung (900) nach einem der Ansprüche 1 bis 14, wobei die erste Funkzugangstechnologie eine Funkzugangstechnologie der vierten Generation, 4G, umfasst und die zweite Funkzugangstechnologie eine Funkzugangstechnologie der sechsten Generation, 6G, umfasst.

18. Verfahren, umfassend:
Empfangen (406, 506, 606, 703, 801) eines ersten Satzes von Fronthaul-Daten, die einer ersten Funkzugangstechnologie zugeordnet sind;
Empfangen (407, 507, 607, 704, 802) eines zweiten Satzes von Fronthaul-Daten, die einer zweiten Funkzugangstechnologie zugeordnet sind, die sich von der ersten Funkzugangstechnologie unterscheidet; und
**dadurch gekennzeichnet, dass** es umfasst
Bestimmen (408, 508, 608, 707, 803), zumindest auf der Grundlage des ersten Satzes von Fronthaul-Daten und des zweiten Satzes von Fronthaul-Daten, ob eine oder mehrere Funkverkettungen von mindestens zwei Funkverkettungen für eine Spektrumsteilung zwischen zumindest der ersten Funkzugangstechnologie und der zweiten Funkzugangstechnologie zu nutzen sind.

19. Computerprogramm, umfassend Anweisungen, die, wenn sie von einer Vorrichtung (900) ausgeführt werden, die Vorrichtung (900) veranlassen, zumindest Folgendes auszuführen:
Empfangen eines ersten Satzes von Fronthaul-Daten, die einer ersten Funkzugangstechnologie zugeordnet sind;
Empfangen eines zweiten Satzes von Fronthaul-Daten, die einer zweiten Funkzugangstechnologie zugeordnet sind, die sich von der ersten Funkzugangstechnologie unterscheidet; und
**dadurch gekennzeichnet, dass** es umfasst
Bestimmen, zumindest auf der Grundlage des ersten Satzes von Fronthaul-Daten und des zweiten Satzes von Fronthaul-Daten, ob eine oder mehrere Funkverkettungen von mindestens zwei Funkverkettungen (209, 209A) für eine Spektrumsteilung zwischen zumindest der ersten Funkzugangstechnologie und der zweiten Funkzugangstechnologie zu nutzen sind.

## Revendications

1. Appareil (900) comprenant :
des moyens pour recevoir un premier ensemble de données fronthaul associé à une première technologie d'accès radio ;
des moyens pour recevoir un second ensemble de données fronthaul associé à une seconde technologie d'accès radio différente de la première technologie d'accès radio ; et
**caractérisé en ce qu'**il comprend
des moyens pour déterminer, sur la base au moins du premier ensemble de données fronthaul et du second ensemble de données fronthaul, s'il faut utiliser une ou plusieurs chaînes radio parmi au moins deux chaînes radio (209, 209A) pour un partage de spectre entre au moins la première technologie d'accès radio et la seconde technologie d'accès radio.

2. Appareil (900) selon la revendication 1, comprenant en outre des moyens pour activer au moins une chaîne radio désactivée parmi les au moins deux chaînes radio (209, 209A) sur la base de la détermination.

3. Appareil (900) selon l'une quelconque des revendications précédentes, comprenant en outre des moyens pour désactiver au moins une chaîne radio parmi les au moins deux chaînes radio (209, 209A) sur la base de la détermination.

4. Appareil (900) selon l'une quelconque des revendications précédentes, comprenant en outre des moyens pour transmettre le premier ensemble de données fronthaul et le second ensemble de données fronthaul à une chaîne radio parmi les au moins deux chaînes radio (209, 209A) sur la base de la détermination.

5. Appareil (900) selon l'une quelconque des revendications 1 à 3, comprenant en outre :
des moyens pour transmettre le premier ensemble de données fronthaul à une première chaîne radio (209) parmi les au moins deux chaînes radio (209, 209A) sur la base de la détermination ; et
des moyens pour transmettre le second ensemble de données fronthaul à une seconde chaîne radio (209A) parmi les au moins deux chaînes radio (209, 209A) sur la base de la détermination.

6. Appareil (900) selon l'une quelconque des revendications précédentes, dans lequel la détermination est basée sur au moins l'un parmi : une ou plusieurs exigences de traitement de canal d'accès aléatoire en liaison montante, une ou plusieurs formes d'onde en liaison descendante dont la transmission est demandée, une exigence de rapport puissance crête sur puissance moyenne pour la transmission de la ou des formes d'onde en liaison descendante, ou une ou plusieurs exigences de puissance de transmission en liaison descendante pour la transmission de la ou des formes d'onde en liaison descendante.

7. Appareil (900) selon la revendication 6, dans lequel la détermination est basée au moins sur le fait qu'une chaîne radio unique parmi les au moins deux chaînes radio (209, 209A) est capable de transmettre la ou les formes d'onde en liaison descendante sans dégradation d'une amplitude de vecteur d'erreur par rapport à l'utilisation de plus d'une chaîne radio parmi les au moins deux chaînes radio (209, 209A) pour transmettre la ou les formes d'onde en liaison descendante.

8. Appareil (900) selon l'une quelconque des revendications 6 à 7, dans lequel la détermination est basée au moins sur le fait qu'une chaîne radio unique parmi les au moins deux chaînes radio (209, 209A) est capable d'une transmission simultanée de la ou des formes d'onde en liaison descendante de sorte que l'exigence de rapport puissance crête sur puissance moyenne est satisfaite,
dans lequel la ou les formes d'onde en liaison descendante comprennent au moins une forme d'onde en liaison descendante associée à la première technologie d'accès radio et au moins une forme d'onde en liaison descendante associée à la seconde technologie d'accès radio.

9. Appareil (900) selon l'une quelconque des revendications 6 à 8, dans lequel la détermination est basée au moins sur le fait qu'une chaîne radio unique parmi les au moins deux chaînes radio (209, 209A) est capable de satisfaire la ou les exigences de traitement de canal d'accès aléatoire en liaison montante pour des occasions de canal d'accès aléatoire se chevauchant de la première technologie d'accès radio et de la seconde technologie d'accès radio.

10. Appareil (900) selon l'une quelconque des revendications précédentes, comprenant en outre :
des moyens pour recevoir une première configuration pour utiliser une première chaîne radio (209) parmi les au moins deux chaînes radio (209, 209A) pour au moins l'une de la première technologie d'accès radio ou de la seconde technologie d'accès radio ;
des moyens pour recevoir une seconde configuration pour utiliser une seconde chaîne radio (209A) parmi les au moins deux chaînes radio (209, 209A) pour au moins l'une de la première technologie d'accès radio ou de la seconde technologie d'accès radio ;
des moyens pour configurer la première chaîne radio (209) sur la base de la première configuration ; et
des moyens pour configurer la seconde chaîne radio (209A) sur la base de la seconde configuration.

11. Appareil (900) selon l'une quelconque des revendications précédentes, comprenant en outre :
des moyens pour recevoir une indication pour initier la détermination ; et
des moyens pour initier la détermination sur la base de la réception de l'indication.

12. Appareil (900) selon l'une quelconque des revendications précédentes, dans lequel l'appareil comprend une unité radio (207) partagée entre au moins la première technologie d'accès radio et la seconde technologie d'accès radio.

13. Appareil (900) selon l'une quelconque des revendications précédentes, dans lequel le premier ensemble de données fronthaul est reçu d'une première unité distribuée (105) associée à la première technologie d'accès radio, et
dans lequel le second ensemble de données fronthaul est reçu d'une seconde unité distribuée (105A) associée à la seconde technologie d'accès radio.

14. Appareil (900) selon l'une quelconque des revendications 1 à 12, dans lequel le premier ensemble de données fronthaul et le second ensemble de données fronthaul sont reçus d'une unité distribuée unique (105).

15. Appareil (900) selon l'une quelconque des revendications précédentes, dans lequel la première technologie d'accès radio comprend une technologie d'accès radio de cinquième génération, 5G, et la seconde technologie d'accès radio comprend une technologie d'accès radio de sixième génération, 6G.

16. Appareil (900) selon l'une quelconque des revendications 1 à 14, dans lequel la première technologie d'accès radio comprend une technologie d'accès radio de quatrième génération, 4G, et la seconde technologie d'accès radio comprend une technologie d'accès radio de cinquième génération, 5G.

17. Appareil (900) selon l'une quelconque des revendications 1 à 14, dans lequel la première technologie d'accès radio comprend une technologie d'accès radio de quatrième génération, 4G, et la seconde technologie d'accès radio comprend une technologie d'accès radio de sixième génération, 6G.

18. Procédé comprenant :
la réception (406, 506, 606, 703, 801) d'un premier ensemble de données fronthaul associé à une première technologie d'accès radio ;
la réception (407, 507, 607, 704, 802) d'un second ensemble de données fronthaul associé à une seconde technologie d'accès radio différente de la première technologie d'accès radio ; et
**caractérisé en ce qu'**il comprend
la détermination (408, 508, 608, 707, 803), sur la base au moins du premier ensemble de données fronthaul et du second ensemble de données fronthaul, s'il faut utiliser une ou plusieurs chaînes radio parmi au moins deux chaînes radio pour un partage de spectre entre au moins la première technologie d'accès radio et la seconde technologie d'accès radio.

19. Programme d'ordinateur comprenant des instructions qui, lorsqu'elles sont exécutées par un appareil (900), amènent l'appareil (900) à effectuer au moins ce qui suit :
la réception d'un premier ensemble de données fronthaul associé à une première technologie d'accès radio ;
la réception d'un second ensemble de données fronthaul associé à une seconde technologie d'accès radio différente de la première technologie d'accès radio ; et
**caractérisé en ce qu'**il comprend
la détermination, sur la base au moins du premier ensemble de données fronthaul et du second ensemble de données fronthaul, s'il faut utiliser une ou plusieurs chaînes radio parmi au moins deux chaînes radio (209, 209A) pour un partage de spectre entre au moins la première technologie d'accès radio et la seconde technologie d'accès radio.
